# EUROPÄISCHE PATENTSCHRIFT

(11) **EP 1 433 606 B1**
(45) Veröffentlichungstag und Bekanntmachung des Hinweises auf die Patenterteilung: **31.12.2008**
(21) Anmeldenummer: 03104421.7
(22) Anmeldetag: 27.11.2003
(51) Int. Cl.: B41F 33/00

(54) **Vorrichtung und ein Verfahren zum Bedienen einer Druckmaschine**
Method and means for controlling a printing press
Procédé et dispositif pour commander une machine à imprimer

(30) Priorität: 16.12.2002 DE 10258704; 14.04.2003 DE 10317064
(43) Veröffentlichungstag der Anmeldung: 30.06.2004
(60) Teilanmeldung: 07115081.7
(73) Patentinhaber: Koenig & Bauer Aktiengesellschaft, 97080 Würzburg (DE)
(72) Erfinder: Czotscher, Andreas, 97199, Ochsenfurt (DE); Geiger, Helmut, 97950, Grossrinderfeld-Gerchsheim (DE); Giesel, Stefan, 97723, Oberthulba (DE); Hüller, Thomas, 97753, Karlstadt (DE); Mees, Jürgen, 97273, Kürnach (DE); Rath, Armin, 97250, Erlabrunn (DE); Römling, Mirko, 97209, Veitshöchheim (DE)
(74) Vertreter: Hoffmann, Thomas

(56) Entgegenhaltungen:
- EP-A- 0 990 519
- DE-A- 4 100 170

## Beschreibung

Die Erfindung betrifft eine Vorrichtung und ein Verfahren zum Bedienen einer Druckmaschine gemäß den Merkmalen des Anspruchs 1 bzw. 11.

Durch die DE 41 00 170 ist ein Farbabstimmpult mit einem Ablagebereich bekannt, auf welchem ein mit einer Druckmaschine hergestelltes Produkt aufgelegt und seitenweise im Hinblick auf Registerhaltigkeit und/oder Farbe kontrolliert werden kann.

Die DE 37 18 594 A1 offenbart eine Einrichtung zur Steuerung einer Maschine, wobei mittels einer ersten Gruppe von Bedienelementen die Zuordnung einer zweiten Gruppe von Bedienelementen zu zu steuernden Komponenten zu treffen ist und diese Zuordnung mittels Anzeigeelementen angezeigt wird.

Die DE 32 20 622 C2 offenbart ein Bedienpult, auf welchem ein mit der Druckmaschine hergestelltes Produkt aufgelegt und auf einen Parameter hin, z.B. Farbdeckung, seitenweise vom Bedienpersonal kontrolliert werden kann. Hierzu wird über eine Auswahleinrichtung eine Farbe ausgewählt.

Durch die DE 32 20 622 C2 ist eine Vorrichtung zur Steuerung der Farbführung offenbart, wobei ein Bildschirm ein durchsichtiges, druckempfindliches Anzeigefeld aufweist. Nach Auswahl eines Aggregates, z. B. der Registerverstellung, in einer Darstellung des Maschinenplans wird ein Bild angezeigt, das nur die Eingabe von Werten oder Befehlen an die Registerverstellung erlaubt.

Die EP 0 990 519 A2 offenbart eine Bedieneinheit für eine Steuereinrichtung einer Druckmaschine, wobei sich mittels einer begrenzten Anzahl von Bedienelementen, denen jeweils starr ein festgelegter Bedeutungsinhalt zugeordnet ist, Befehlsfolgen erzeugen lassen. In einer Ausgestaltung weist die Bedieneinheit mindestens ein Bedienelement zur wertmäßigen Spezifizierung der eingegebenen Befehlsfolge auf, wobei die wertmäßige Spezifizierung in einem zweiten Anzeigefeld dargestellt ist.

Der Erfindung liegt die Aufgabe zugrunde, ein einfaches und schnelles Bedienen einer Druckmaschine zu ermöglichen.

Die Aufgabe wird erfindungsgemäß durch die Merkmale des Anspruchs 1 bzw. 11 gelöst.

Die mit der Erfindung erzielbaren Vorteile bestehen insbesondere darin, dass es dem Bediener möglich ist, Korrekturen sicher und schnell vorzunehmen.

In Weiterbildung sind Werte für die Regelung und Steuerung der Maschine über ein touchscreenfähiges Anzeigefeld am Bildschirm direkt veränder- bzw. eingebbar. Auch hierdurch wird ein einfaches und schnelles bedienen ermöglicht. Durch das Öffnen des zur Eingabefensters nur bei Bedarf ist es möglich, die am Bildschirm angezeigte Maske sehr übersichtlich zu gestalten, da nur bei Änderungswunsch das Fenster öffnet und zum anderen lediglich ein einziges Fenster vorgesehen sein muss, welches für die unterschiedlichsten Parameterfelder zu öffnen ist.

Ausführungsbeispiele der Erfindung sind in den Zeichnungen dargestellt und werden im folgenden näher beschrieben.

Es zeigen:
- Fig. 1: eine schematische Anlage mit Steuereinrichtung und Leitstand;
- Fig. 2: eine schematische Draufsicht des Bedienpultes;
- Fig. 3: eine schematische Ansicht des Bildschirms.

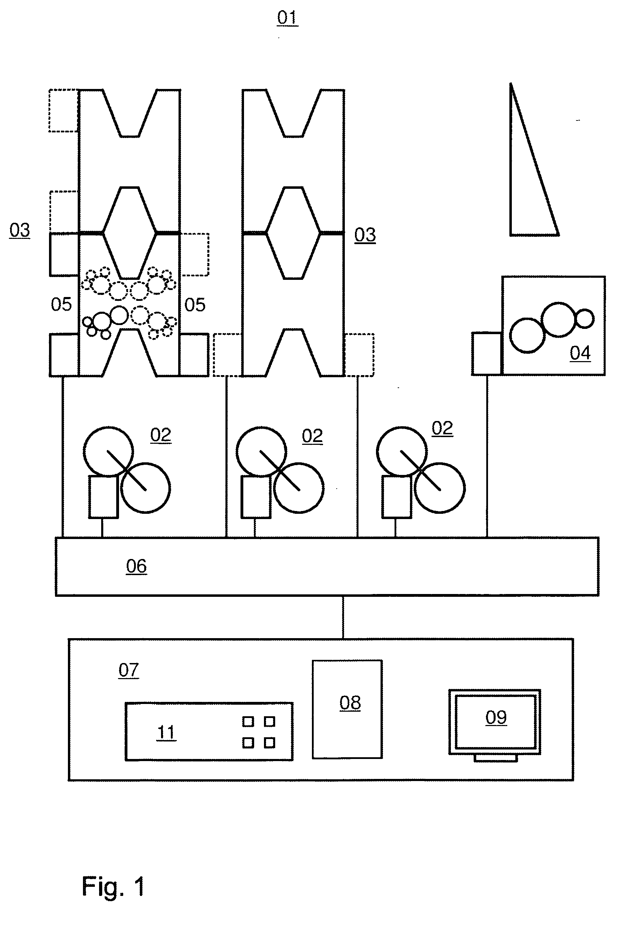

Eine Anlage 01, beispielsweise wie in Fig. 1 dargestellt eine Druckmaschine 01 oder Druckmaschinenanlage 01, weist eine Anzahl von Aggregaten 02; 03; 04, beispielsweise Anlagenteile zur Ausführung bestimmter Verfahrensschritte, wie Materialzuführung 02 (z. B. ein Rollenwechsler 02 oder mehrere Rollenwechsler 02.1; 02.2; 02.3 etc.), Druckeinheiten bzw. -türme 03, Aggregate zur Weiterverarbeitung 04, wie Falzapparate 04 etc., auf. Die Druckeinheiten 03 können wiederum mehrere untergeordnete Aggregate 05, z. B. Druckwerke 05, z. B. bezeichnet mit 05.1; 05.2; 05.3; 05.4 etc., aufweisen. Die verschiedenen Aggregate 02; 03; 04; 05 können jeweils einmal oder mehrmals in der Anlage vorgesehen sein. Für verschiedene Ausführungen der Anlage können Anzahl und/oder Ausprägung der Aggregate 02; 03; 04; 05 unterschiedlich sein.

Durch die Druckmaschine werden eine oder mehrere Bahnen ein oder mehrfarbig bedruckt. Hierzu weisen die Druckwerke 05 in Querrichtung zur Bahn Farbbereiche auf, welche z.B. der Anzahl der nebeneinander anzuordnenden Druckformen/Druckseiten entsprechen. Jeder Farbbereich weist wiederum z.B. nebeneinander eine oder mehrere Farbzonen und nicht dargestellten Stelleinrichtungen auf. Die Stelleinrichtungen sind in üblicher Weise, z. B. mittels stellbarer Farbmesser, ausgeführt. Es sind jedoch je nach Ausführung des Farbwerkes auch andere Stelleinrichtungen möglich.

Des weiteren weist die Anlage 01 ein symbolisch dargestelltes Steuerungssystem 06 auf, welches einerseits die Kommunikation zu den Aggregaten 02; 03; 04; 05, bzw. deren Antriebe, Einstellungen bzw., für sich und im Zusammenspiel zueinander steuert. Auf der anderen Seite ist zwischen dem Steuersystem 06 und einem Leitstand 07 eine Kommunikation möglich, durch welche eine Visualisierung von z. B. aktuellen Einstellungen und/oder Messwerten zum Leitstand 07 erfolgen kann. In umgekehrter Richtung sind am Leitstand 07 Einstellwerte für die Aggregate betreffende Parameter, z.B. Einstellwerte für die o.g. Stelleinrichtungen der Farbzonen, vorgeb- bzw. veränderbar.

Der Leitstand 07 weist im Beispiel zumindest eine Rechen- bzw. Datenverarbeitungseinheit 08 (Leitstandsrechner 08), eine Visualisierung 09 (Bildschirm 09) sowie eine Bedienpult 11 auf. Der Leitstand 07 dient der Kommunikation des Bedienpersonals mit der Anlage 01 oder einer Sektion der Anlage 01.

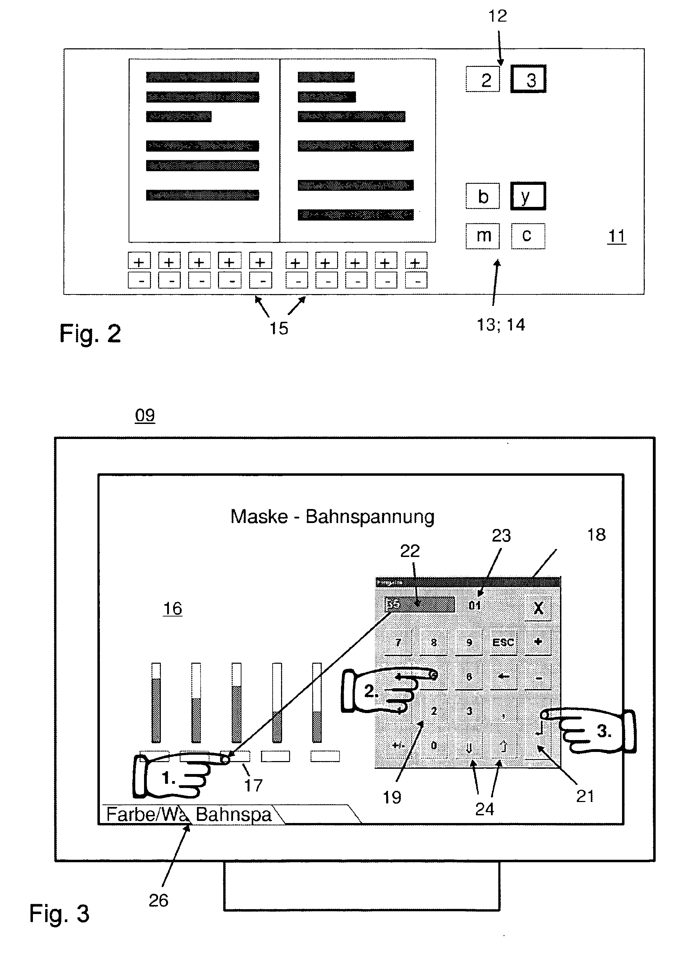

Das Bedienpult 11 (Fig. 2) weist einen Ablagebereich auf, auf welchem ein mit der Anlage 01 hergestelltes Produkt aufgelegt und seitenweise im Hinblick auf Umfangs-, Farb-und/oder Seitenregister (Längs-, Quer-, Schnittregister) und/oder Passer und/oder Farbedichte/Farbechtheit vom Bedienpersonal kontrolliert werden kann.

Der Leitstand 07 kann grundsätzlich für maschinenorientierte Bedienung oder für produktorientierte Bedienung ausgeführt sein. Vorteilhaft wie im Beispiel gezeigt, ist der Leitstand 07 für eine produktorientierte Bedienung ausgeführt. D. h. eine Änderung z.B. einer Farbeinstellung auf einer bestimmten Druckseite wird nicht vom Bedienpersonal an einem von diesem direkt anzuwählenden Druckwerk verändert, sondern direkt auf der anzuwählenden Seite des Produktes. Der Drucker muss hierfür nicht wissen, in welchem Druckwerk an welcher axialen Position welche Farbe dieser Seite bedruckt wurde. Die Anwahl kann direkt über Eingabe, z.B. der Seitenzahl, am Bedienpult 11 oder aber unterstützt durch eine Bilderkennung, z. B. eine Kamera mit entsprechender Softwareauswertung, erfolgen.

Zusätzlich zu einer Anwahl und/oder einer Anzeige 12 der gerade aktiven Seite (manuell oder per Bilderkennung) weist das Bedienpult 11 Mittel zur Anzeige 13 (Visualisierung) und/oder Anwahlmittel 14 einer zu stellenden Farbe auf. Das heißt, von der Druckmaschine bzw. dem Leitstandsrechner 08 erfolgt eine Rückkopplung zum Bedienpult hin, welche Farben überhaupt für die gewählte Seite in Frage kommen und daher änderbar sind. Aus prinzipiell n (z. B. n = 6) möglichen Farben werden dann m (m ≤ n) Farben automatisch gekennzeichnet und dem Bediener somit angezeigt. Diese Visualisierung auf dem Bedienpult 11 kann anstelle oder zusätzlich zur Visualisierung am Bildschirm 09 vorgesehen sein. Auf dem Bedienpult 11 erfolgt nun eine Anzeige 12 der gerade aktiven Seite(n) und der Ablageort auf dem Bedienpult 11. Dies kann in der schematisch in Fig. 2 angedeuteten Weise durch zwei nebeneinander angeordnete Felder erfolgen, von welchen das Feld mit der aktiven Seite kenntlich gemacht ist, oder in einer anderen geeigneten Weise. Gleichzeitig mit der Anzeige der aktiven Seite werden anhand der Mittel zur Anzeige 13 (Visualisierung), z. B. in weiteren Feldern 13, sämtliche Farben dieser Seite angezeigt. D.h. es wird dem Bedienpersonal die Information darüber gegeben, welche Farben die betreffende Seite aufweist und infolge dessen stellbar sind. Dies kann in der schematisch in Fig. 2 angedeuteten Weise durch mehrere Felder 13, allgemein Anzeigeelemente 13, erfolgen. Die gerade aktivierte Farbe kann zusätzlich kenntlich gemacht sein. Die Mittel zur Anzeige 13 der Farben und entsprechende Anwahlmittel 14 können voneinander verschieden sein oder aber in einer entsprechend ausgeführten Taste mit Leucht- und/oder Displayfunktion vereint sein. Vorteilhaft sind n (z. B. n = 6) Tasten mit Leucht- und/oder Displayfunktion als Anzeigeelemente 13 vorgesehen, von welchen m Tasten zur Kennzeichnung der Verfügbarkeit der Farbe auf der betreffenden Seite leuchten. Die für die Tasten 15 aktivierte Farbe blinkt und ist durch Drücken einer anderen leuchtenden Taste wechselbar.

Sind durch das Bedienpersonal Korrekturen auf bestimmten Seiten, z. B. Seite 2 und 3 des fertigen Produktes, durchzuführen, so wählt das Bedienpersonal mittels nicht dargestellter Mittel am Bedienpult 11 die entsprechende Seite an (oder schlägt sie auf und erhält diese über die o.g. Bilderkennung). Im Bereich der Anzeige 13 erhält das Bedienpersonal die Information darüber, welche Farben (z. B. b = black, y = yellow, m = magenta, c = cyan) diese Seite beinhaltet. Es leuchten dann z.B. die betreffenden Felder 13 auf. Soll eine Farbe, z. B. gelb y, korrigiert werden, so wird mit dem entsprechenden Feld 13 (oder der nicht dargestellten gesonderten Anwahlmöglichkeit 14) diese Farbe ausgewählt, um anschließend über ein Array von Tasten 15 über "+" und "-" die Farbe in den Farbzonen einzustellen. Die Taste 13 der ausgewählten Farbe blinkt dann beispielsweise.

Die Information über die Farbbelegung zur jeweiligen Seitenbelegung erhält das Bedienpult 11 über den Leitstandsrechner 08. In umgekehrter Weise enthält der Leitstandrechner die Zuordnung der Seiten zu den betroffenen Druckwerken und Farbzonenstellantrieben.

Beim Überprüfen der Druckseiten auf dem Bedienpult 11 kann es vorteilhaft vorgesehen sein, dass nach Aktivierung der Farbüberprüfung für eine bestimmte Druckseite alle anwählbaren Farben dieser Seite gekennzeichnet sind und, wenn vorhanden, immer zunächst mit ,Schwarz' begonnen wird. Das System springt nach Auswahl dieser Seite also zunächst auf den Änderungsmodus für ,Schwarz', so dass die Tasten 15 auf die Stellmittel des entsprechenden Druckwerkes wirken. Das Anzeigeelement 13 für ,Schwarz' blinkt. Das Bedienpersonal kann nun über die Tasten 15 "Schwarz' korrigieren oder aber eine andere Farbe anwählen, welche es dann ändern möchte. Auch für die weiteren Farben kann ein Zyklus vorgegeben sein, welcher die Farben (jedoch lediglich die auf der Seite vorhandenen) nach einer vorgebbaren und/oder vorgegebenen Reihenfolge abarbeitet.

In einer vorteilhaften Ausführung (Fig. 3) ist der Bildschirm 09 zur Visualisierung und Eingabe ausgeführt. Er weist vorzugsweise ein Anzeigefeld 16 mit mindestens einem aktivierbaren, insbesondere berührungssensitiven Bereich 17 auf. In diesem Anzeigefeld 16 werden z.B. für die aktuelle Einstellung wesentliche Parameter, Ist-Werte und/oder Soll-Werte eingeblendet. Dies können beispielsweise Vorgabewerte und/oder Istwerte für Register, für Bahnspannung etc. sein. Im berührungssensitiven Bereich 17, z.B. dem Parameterfeld 17 sind aktuell angezeigte Werte angezeigt und veränderbar. Wird dieses Parameterfeld 17 berührt (1.), so öffnet sich auf dem Anzeigefeld 16 ein beispielsweise ein Eingabefenster bzw. Eingabefeld 18 mit numerischen Tasten 19 und einer Übernahmetaste 21 zur Übernahme der gewählten Werte (und ggf. zusätzlichen Funktionen).

Die Werte sind in einer ersten Weise wählbar, indem über die numerischen Tasten 19 der gewünschte Wert eingegeben (2.), und ggf. in einem Display 22 angezeigt, und anschließend durch die Übernahmetaste 21 (3.) in das Parameterfeld 17 übernommen wird. In vorteilhafter Weiterbildung können alternativ oder auch zusätzlich zur reinen Werteeingabe können z. B. auch Inkremente bzw. Dekremente 23 vorgegeben sein, wobei der im Display 22 aktuell angezeigte Wert durch die Felder ⇑ und ⇓ 24 (oder "+" und " - ") in den Schritten des angezeigten Dekrements 23 nach oben oder unten veränderbar sind. Auch der Schritt des Dekrements 23 ist von einem vordefinierten Wert in einen gewünschten Wert veränderbar, indem beispielsweise über die numerischen Tasten die Ziffern gewählt und anschließend mit den Feldern 24 der im Display angezeigte Wert verändert wird, bevor letzterer in das Parameterfeld 17 übernommen wird. In vorteilhafter Weiterbildung weist das Anzeigefeld 16 aktivierbare Felder bzw. Tasten 26 auf, mittels derer die gerade auf dem Anzeigefeld 16 aktive Maske wählbar ist. So kann beispielsweise wie in Fig. 3 beispielhaft gezeigt, eine Maske mit relevanten Informationen und Parameterfeldern 17 zur Bahnspannung aktiviert sein. In einem anderen Fall können Informationen und Parameterfelder 17 zur Farbe und Feuchtwasser aktiviert sein.

Das Anzeigefeld 16 des Bildschirmes 09 ist zumindest im Bereich der jeweils änderbaren Parameterfelder 17 sowie im Bereich des sich öffnenden Fensters 18 (bzw. dessen Tasten 19; 21; 24) und falls vorhanden im Bereich der Felder 26 berührungssensitiv ausgeführt sein. In vorteilhafter Ausführung ist das gesamte Anzeigefeld 16 des Bildschirms 09 berührungssensitiv ausgeführt und kommuniziert über eine entsprechende Software mit einer ihm zugeordneten Rechen- und/oder Datenverarbeitungseinheit, z.B. mit dem Leitstandsrechner 08.

In einer einfacheren Ausführung -wobei jedoch ebenfalls die Vorteile im Hinblick auf ein übersichtliches Anzeigefeld zum Tragen kommen - erfolgt die Bedienung nicht per Berührung des Bediener, sondern über einen Zeiger oder Cursor, welcher mittels einer Navigiervorrichtung, z.B. einer Computermaus, einem Trackball, über entsprechende Tasten oder in anderer geeigneter Weise über das Anzeigefeld 16 bewegbar ist und eine Bestätigungstaste aufweist um über das angefahrene Parameterfeld 17 das Eingabefeld 18 zu aktivieren.

### Bezugszeichenliste

- 01: Anlage, Druckmaschine, Druckmaschinenanlage
- 02: Aggregat, Materialzuführung, Rollenwechsler
- 02.1: Rollenwechsler
- 02.2: Rollenwechsler
- 02.3: Rollenwechsler
- 03: Aggregat, Druckeinheit, Druckturm
- 04: Aggregat zur Weiterverarbeitung, Falzapparat
- 05: Aggregat, Druckwerk
- 06: Steuerungssystem
- 07: Leitstand
- 08: Rechen- bzw. Datenverarbeitungseinheit, Leitstandsrechner
- 09: Visualisierung, Bildschirm
- 10: -
- 11: Bedienpult
- 12: Anzeige, Seite
- 13: Anzeige, Anzeigeelement, Farbe, Felder, Taste
- 14: Anwahlmittel
- 15: Tasten
- 16: Anzeigefeld
- 17: Bereich, Parameterfeld
- 18: Eingabefenster, Eingabefeld
- 19: Taste, numerisch
- 20: -
- 21: Übernahmetaste
- 22: Display
- 23: Inkremente bzw. Dekremente
- 24: Feld, Taste
- 25: -
- 26: Feld, Taste

## Patentansprüche

1. Vorrichtung zum Bedienen einer Druckmaschine (01), mit einem Anzeigefeld (16) eines Bildschirms (09), auf welchem für die aktuelle Einstellung der Druckmaschine (01) wahlweise Parameter unterschiedlicher Parameterfelder (17) anzeigbar und aktivierbar sind, wobei ein Eingabefenster (18) mit einer Übernahmetaste (21) zur Übernahme der gewählten Werte in das Parameterfeld (17) vorgesehen ist, **dadurch gekennzeichnet daß**, das Eingabefensrter (18) zusätzlich mumerische Tasten (19) aufweist und sich lediglich bei Aktivierung eines Parameterfeldes (17) öffnet, und daß dieses selbe bedarfsweise aktivierbare Eingabefenster (18) für Parameterfelder (17) unterschiedlicher aktiver Masken öffenbar ist.

2. Vorrichtung nach Anspruch 1, **dadurch gekennzeichnet, dass** mittels des Eingabefensters (18) ein Wert des aktiven Parameterfeldes (17) eingebbar und/oder veränderbar ist.

3. Vorrichtung nach Anspruch 2, **dadurch gekennzeichnet, dass** zur Eingabe bzw. Änderung numerische Tasten (19) vorgesehen sind.

4. Vorrichtung nach Anspruch 2, **dadurch gekennzeichnet, dass** zur Eingabe bzw. Änderung Tasten (24) zur Änderung des Wertes in diskreten Schritten mittels Inkrementen bzw. Dekrementen (23) vorgesehen sind.

5. Vorrichtung nach Anspruch 1, **dadurch gekennzeichnet, dass** das Parameterfeld (17) auf dem Anzeigefeld (16) durch Berührung aktivierbar ausgeführt ist.

6. Vorrichtung nach Anspruch 1, **dadurch gekennzeichnet, dass** das geöffnete Eingabefenster (18) durch Berührung bedienbar ausgeführt ist.

7. Vorrichtung nach Anspruch 1, **dadurch gekennzeichnet, dass** das Anzeigefeld (16) aktivierbare Felder (26) aufweist, mittels derer die gerade auf dem Anzeigefeld (16) aktive Maske wählbar ist.

8. Vorrichtung nach Anspruch 7, **dadurch gekennzeichnet, dass** die Felder (26) auf dem Anzeigefeld (16) durch Berührung bedienbar ausgeführt sind.

9. Vorrichtung nach Anspruch 1, **dadurch gekennzeichnet, dass** das Anzeigefeld (16) berührungssensitiv ausgeführt ist.

10. Vorrichtung nach Anspruch 1, **dadurch gekennzeichnet, dass** Parameterfeld (17) und das Eingabefenster (18) mittels eines Zeigers oder Cursors über eine Navigiervorrichtung anwählbar sind.

11. Verfahren zum Bedienen einer Druckmaschine (01) mit einem Anzeigefeld (16) eines Bildschirms (09), wobei im Anzeigefeld (16) für die aktuelle Einstellung der Druckmaschine (01) wahlweise Parameter unterschiedlicher Parameterfelder (17) in mindestens einem Parameterfeld (17) angezeigt werden, wobei zur Eingabe oder Änderung des Wertes im Parameterfeld (17) dieses aktiviert wird, **dadurch gekennzeichnet, daß** infolge einer Aktivierung auf dem Anzeigefeld (16) ein Eingabefenster (18) mit numerischen Tasten (19) und einer Übernahmetaste (21) zur Übernahme der gewählten Werte in das Parameterfeld (17) geöffnet wird, und daß für Parameterfelder (17) unterschiedlicher aktiver Masken dieses selbe bedarfsweise aktivierbare Eingabefenster (18) aktiviert wird.

12. Verfahren nach Anspruch 11, **dadurch gekennzeichnet, dass** die Aktivierung durch Berührung des Anzeigefeldes (16) im Bereich des Parameterfeldes (17) erfolgt.

13. Verfahren nach Anspruch 11, **dadurch gekennzeichnet, dass** die Aktivierung durch Navigieren eines Zeigers oder Cursors im Bereich des Parameterfeldes (17) erfolgt.

14. Verfahren nach Anspruch 11, **dadurch gekennzeichnet, dass** nach der Aktivierung der Wert mittels des Eingabefensters (18) eingegeben bzw. geändert wird.

15. Verfahren nach Anspruch 14, **dadurch gekennzeichnet, dass** die Eingabe bzw. Änderung durch Berührung des Eingabefensters (18) im Bereich von hierzu vorgesehenen Tasten (19; 21; 24) erfolgt.

16. Verfahren nach Anspruch 14, **dadurch gekennzeichnet, dass** die Eingabe bzw. Änderung durch Navigieren eines Zeigers oder Cursors im Bereich von hierzu vorgesehenen Tasten (19; 21; 24) erfolgt.

17. Verfahren nach Anspruch 14, **dadurch gekennzeichnet, dass** die Eingabe bzw. Änderung in diskreten Schritten in Inkrementen bzw. Dekrementen erfolgt.

18. Verfahren nach Anspruch 14, **dadurch gekennzeichnet, dass** das Eingabefenster (18) nach Bestätigung und nachfolgender Übernahme des eingegebenen bzw. geänderten Wertes in das Parameterfeld (17) geschlossen wird.

## Claims

1. A device for operating a printing press (01), with a display field (16) of a screen (09), on which parameters of different parameter fields (17) can be selectively displayed and activated for the current setting of the printing press (01), with an input window (18) with an enter key (21) for entering the selected values into the parameter field (17) being provided, **characterised in that** the input window (18) additionally has numerical keys (19) and opens merely upon activation of a parameter field (17), and **in that** this same input window (18) which can be activated as needed can be opened for parameter fields (17) of different active masks.

2. A device according to Claim 1, **characterised in that** a value of the active parameter field (17) can be input and/or changed by means of the input window (18).

3. A device according to Claim 2, **characterised in that** numerical keys (19) are provided for inputting or changing.

4. A device according to Claim 2, **characterised in that** keys (24) for changing the value in discrete steps by means of increments or decrements (23) are provided for inputting or changing.

5. A device according to Claim 1, **characterised in that** the parameter field (17) on the display field (16) is designed to be able to be activated by touch.

6. A device according to Claim 1, **characterised in that** the opened input window (18) is designed to be able to be operated by touch.

7. A device according to Claim 1, **characterised in that** the display field (16) has fields (26) which can be activated, by means of which the mask which is just active on the display field (16) is selectable.

8. A device according to Claim 7, **characterised in that** the fields (26) on the display field (16) are designed to be able to be operated by touch.

9. A device according to Claim 1, **characterised in that** the display field (16) is designed to be touch-sensitive.

10. A device according to Claim 1, **characterised in that** [the] parameter field (17) and the input window (18) can be selected by means of a pointer or cursor via a navigating device.

11. A method for operating a printing press (01), with a display field (16) of a screen (09), wherein in the display field (16) for the current setting of the printing press (01) parameters of different parameter fields (17) are selectively displayed in at least one parameter field (17), with the parameter field (17) being activated for inputting or changing the value in the latter, **characterised in that** as a result of activation an input window (18) with numerical keys (19) and an enter key (21) for entering the selected values into the parameter field (17) is opened on the display field (16), and **in that** this same input window (18) which can be activated as needed is activated for parameter fields (17) of different active masks.

12. A method according to Claim 11, **characterised in that** the activation takes place by touching the display field (16) in the region of the parameter field (17).

13. A method according to Claim 11, **characterised in that** the activation takes place by navigation of a pointer or cursor in the region of the parameter field (17).

14. A method according to Claim 11, **characterised in that** after the activation the value is input or changed by means of the input window (18).

15. A method according to Claim 14, **characterised in that** the inputting or changing takes place by touching the input window (18) in the region of keys (19; 21; 24) provided for this purpose.

16. A method according to Claim 14, **characterised in that** the inputting or changing takes place by navigation of a pointer or cursor in the region of keys (19; 21; 24) provided for this purpose.

17. A method according to Claim 14, **characterised in that** the inputting or changing takes place in discrete steps in increments or decrements.

18. A method according to Claim 14, **characterised in that** the input window (18) after confirmation and subsequent entering of the input or changed value into the parameter field (17) is closed.

## Revendications

1. Dispositif pour commander une machine à imprimer (01), avec un champ d'affichage (16) d'un écran (09), sur lequel, pour le réglage réel de la machine à imprimer (01), au choix, des paramètres de différents champs de paramètres (17) sont susceptibles d'être affichés et d'être activés, une fenêtre d'introduction (18), munie d'une touche de validation (21) pour valider les valeurs choisies dans le champ de paramètres (17), étant prévue, **caractérisé en ce que** la fenêtre d'introduction (18) présente en plus des touches numériques (19) et s'ouvre uniquement en cas d'activation d'un champ de paramètres (17), et **en ce que** cette même fenêtre d'introduction (18), activable en cas de besoin, est susceptible d'être ouverte pour des champs de paramètres (17) de masques actifs différents.

2. Dispositif selon la revendication 1, **caractérisé en ce qu'**une valeur du champ de paramètres (17) actif est susceptible d'être introduite et/ou activée au moyen de la fenêtre d'introduction (18).

3. Dispositif selon la revendication 2, **caractérisé en ce que** des touches numériques (19) sont prévues pour procéder à l'introduction ou à la modification.

4. Dispositif selon la revendication 2, **caractérisé en ce que** des touches (24) sont prévues, pour procéder à l'introduction ou à la modification, de manière à modifier la valeur par échelons discrets, par incréments ou décréments (23).

5. Dispositif selon la revendication 1, **caractérisé en ce que** le champ de paramètres (17) situé sur le champ d'affichage (16) est réalisé de manière à être activable de manière tactile.

6. Dispositif selon la revendication 1, **caractérisé en ce que** la fenêtre d'introduction (18) ouverte est réalisée de manière à pouvoir être commandée de manière tactile.

7. Dispositif selon la revendication 1, **caractérisé en ce que** le champ d'affichage (16) présente des champs (26) activables, au moyen desquels le masque, justement actif sur le champ d'affichage (16), peut être sélectionné.

8. Dispositif selon la revendication 7, **caractérisé en ce que** les champs (26) situés sur le champ d'affichage (16) sont réalisés de manière à pouvoir être commandés de manière tactile.

9. Dispositif selon la revendication 1, **caractérisé en ce que** le champ d'affichage (16) est réalisé de manière à être sensible au contact.

10. Dispositif selon la revendication 1, **caractérisé en ce que** le champ de paramètres (17) et la fenêtre d'introduction (18) sont susceptibles d'être sélectionnés au moyen d'un pointeur ou d'un curseur, par l'intermédiaire d'un dispositif de navigation.

11. Procédé pour commander une machine à imprimer (01), avec un champ d'affichage (16) d'un écran (09), où, dans le champ d'affichage (16), pour le réglage réel de la machine à imprimer (01), au choix, des paramètres de différents champs de paramètres (17) sont affichés dans au moins un champ de paramètres (17), où, pour introduire ou modifier la valeur dans le champ de paramètres (17), celle-ci est activée, **caractérisé en ce que,** par suite d'une activation, sur le champ d'affichage (16), une fenêtre d'introduction (18), comprenant des touches numériques (19) et une touche de validation (21) pour valider les valeurs choisies dans le champ de paramètres (17), est ouverte, et alors cette même fenêtre d'introduction (18), activable en cas de besoin, est activée pour des champs de paramètres (17) de masques actifs différents.

12. Procédé selon la revendication 11, **caractérisé en ce que** l'activation est effectuée par contact avec le champ d'affichage (16), dans la zone du champ de paramètres (17).

13. Procédé selon la revendication 11, **caractérisé en ce que** l'activation est effectuée par navigation d'un pointeur ou d'un curseur dans la zone du champ de paramètres (17).

14. Procédé selon la revendication 11, **caractérisé en ce que,** après activation, la valeur est introduite ou modifiée au moyen de la fenêtre d'introduction (18).

15. Procédé selon la revendication 14, **caractérisé en ce que** l'introduction ou la modification est effectuée par entrée en contact avec la fenêtre d'introduction (18), dans la zone de touches (19 ; 21 ; 24) prévues à cet effet.

16. Procédé selon la revendication 14, **caractérisé en ce que** l'introduction ou la modification est effectuée par navigation d'un pointeur ou d'un curseur, dans la zone de touches (19 ; 21 ; 24) prévues à cet effet.

17. Procédé selon la revendication 14, **caractérisé en ce que** l'introduction ou la modification est effectuée par échelons discrets, par incréments ou décréments (23).

18. Procédé selon la revendication 14, **caractérisé en ce que** la fenêtre d'introduction (18) est fermée après confirmation et validation subséquente de la valeur introduite ou modifiée, dans le champ de paramètres (17).
